# EUROPEAN PATENT SPECIFICATION

(11) **EP 0 780 411 B1**
(45) Date of publication and mention of the grant of the patent: **09.09.1998**
(21) Application number: 95120020.3
(22) Date of filing: 19.12.1995
(51) Int. Cl.: C08F 290/06, C08F 290/04, C08F 220/56, C09D 151/00

(54) **Hydrophilic crosslinked polymer fine particles and process for production thereof**
Feine Partikel von hydrophilen vernetzten Polymerisaten und Verfahren zu ihrer Herstellung
Particules fines de polymère hydrophile réticulé et leur procédé de préparation

(43) Date of publication of application: 25.06.1997
(73) Proprietor: KANSAI PAINT CO. LTD., Amagasaki-shi Hyogo-ken (JP)
(72) Inventor: Kondo, Masahiro, Hiratsuka-shi, Kanagawa-ken (JP); Inoue, Hiroshi, Hiratsuka-shi, Kanagawa-ken (JP)
(74) Representative: Kraus, Walter, Dr.

(56) References cited:
- EP-A- 0 116 779
- EP-A- 0 349 241
- EP-A- 0 614 921
- FR-A- 2 589 145

## Description

The present invention relates to hydrophilic crosslinked polymer fine particles, particularly hydrophilic crosslinked polymer fine particles suitably used for formation of a hydrophilic film; a process for production of the polymer fine particles; and a hydrophilic film-forming aqueous coating composition containing the polymer fine particles.

As one process for synthesizing hydrophilic crosslinked polymer fine particles, a process is known which comprises conducting dispersion polymerization using acrylamide as a main monomer component, in a water-miscible organic solvent capable of dissolving the monomer components but substantially incapable of dissolving the polymer formed. In this process, however, when the dispersion polymerization is conducted in the absence of any dispersion stabilizer, the polymer fine particles formed are agglomerated and precipitated in many cases; therefore, the dispersion polymerization is conducted generally in the presence of a dispersion stabilizer for formed polymer [see, for example, Japanese Patent Application Kokai (Laid-Open) No. 132705/1992].

Even in the above process using a dispersion stabilizer, however, polymer agglomerates are often formed during the polymerization and, moreover, since the dispersion stabilizer adheres onto the formed polymer particles by mere physical adsorption, the polymer particles have a problem in dispersion stability during storage, depending upon the storage condition. Furthermore, when the polymer particles are used for formation of a film, the uncrosslinked dispersion stabilizer remains in the formed film depending upon the curing system employed, which allows the film to have significantly inferior properties.

Generally, in the dispersion polymerization of a (meth)acrylamide type monomer, a solvent containing a large amount of a lower alcohol is used as the reaction solvent. This solvent, however, has a low flash point; consequently, use of the dispersion obtained from the dispersion polymerization, in coating application has a handling problem.

The main object of the present invention is to provide hydrophilic crosslinked polymer fine particles which are superior in in-solvent polymerization stability as well as in dispersion stability during storage, which undergoes no adverse effect by dispersion stabilizer owing to no use of any dispersion stabilizer, and which can be suitably used for formation of a hydrophilic film.

The other object of the present invention is to provide a hydrophilic film-forming aqueous coating composition containing the above hydrophilic crosslinked polymer fine particles, which can form a film having excellent hydrophilicity.

The present inventors made a study in order to solve the above-mentioned problems of the prior art and, as a result, newly found out that the above problems can be solved by hydrophilic crosslinked polymer fine particles obtained by polymerization of a monomer mixture containing given amounts of essential components, i.e. a monomer having at least one polymerizable double bond and a polyoxyalkylene or polyvinylpyrrolidone chain, a (meth)acrylamide type monomer and a crosslinkable unsaturated monomer. The present invention has been completed based on the finding.

According to the present invention there is provided hydrophilic crosslinked polymer fine particles made of a copolymer composed of:
2-50% by weight of (a) a hydrophilic monomer having, in the molecule, at least one polymerizable double bond and a polyoxyalkylene or polyvinylpyrrolidone chain,
20-97% by weight of (b) at least one (meth)acrylamide type monomer selected from the group consisting of the compounds represented by the following general formula [1]: 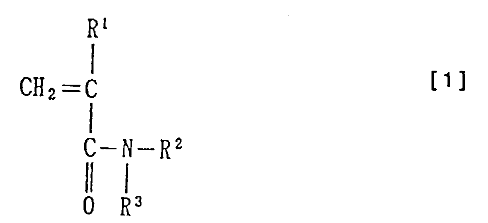 (wherein R¹ is a hydrogen atom or a methyl group; and R² and R³ may be the same or different and are each a hydrogen atom or an alkyl group having 1-5 carbon atoms with a proviso that the sum of the carbon atoms of R² and R³ is 5 or less),
1-30% by weight of (c) a crosslinkable unsaturated monomer selected from the group consisting of compounds having, in the molecule, at least two polymerizable double bonds, and compounds having, in the molecule, at least one functional group selected from hydrolyzable silyl groups and 1,2-epoxy groups and one polymerizable double bond, and
0-50% by weight of (d) a monomer other than the above (a), (b) and (c), having a polymerizable unsaturated group in the molecule.

The hydrophilic crosslinked polymer fine particles of the present invention are hereinafter described in more detail.

### Hydrophilic monomer (a)

The monomer (a) is a compound having, in the molecule, at least one, preferably one or two, particularly preferably one polymerizable double bond and a polyoxyalkylene or polyvinylpyrrolidone chain. Typical examples thereof are the compounds represented by the following general formulas [2], [3] and [4]: 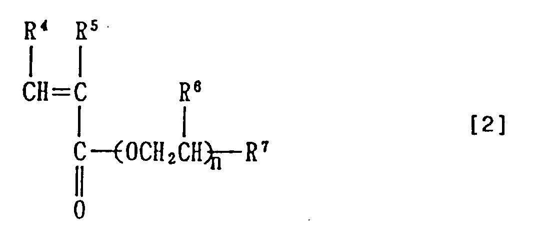 [wherein R⁴, R⁵ and R⁶ may be the same or different and are each a hydrogen atom or a methyl group; n is an integer of 10-200; R⁷ is -OH, -OCH₃, -SO₃H or -SO₃⁻M⁺ (where M⁺ is Na⁺, K⁺, Li⁺, NH₄⁺ or an organic ammonium group); R⁶s in the n groups represented by: 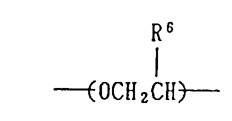 may be the same or different; the above organic ammonium group may be a primary, secondary, tertiary or quaternary organic ammonium group, and the nitrogen atom has at least one organic group and 0-3 hydrogen atoms bonded thereto; examples of the organic group are an alkyl group of 1-8 carbon atoms, an aryl group and an aralkyl group, all of which may contain a hetero atom(s) such as O, S, N and/or the like], 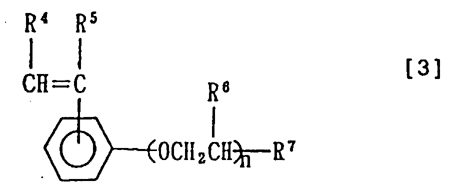 (wherein R⁴, R⁵, R⁶, R⁷ and n have the same definitions as given above), 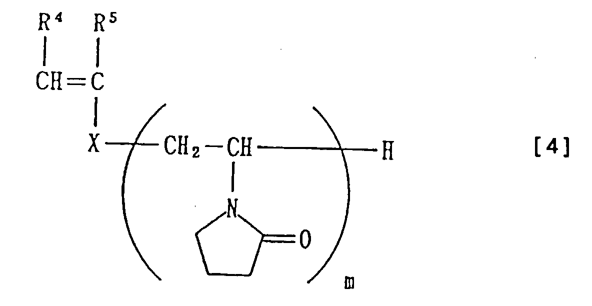 (wherein R⁴ and R⁵ have the same definitions as given above; X is a bivalent organic group having 5-10 carbon atoms, which may contain an O, S or N atom(s); and m is an integer of 10-100).

Specific examples of the "bivalent organic group having 5-10 carbon atoms, which may contain an O, S or N atom(s)" represented by X in the above general formula [4] include a group represented by the following formula.

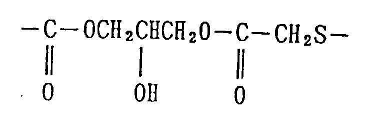

The monomer (a) is preferably a compound of formula [2] or [3], particularly a compound of formula [2] or [3] wherein n is 30-200, particularly 40-150, in view of, for example, the dispersion stability of the resulting polymer fine particles when the monomer (b) is used in a large amount. Particularly preferable is a compound of formula [2] or [3] wherein R⁴ is a hydrogen atom, R⁵ is a hydrogen atom or a methyl group, and R⁶ is a hydrogen atom.

### (Meth)acrylamide type monomer (b)

The monomer (b) used for forming the polymer fine particles of the present invention is at least one compound selected from the compounds represented by the following general formula [1]: 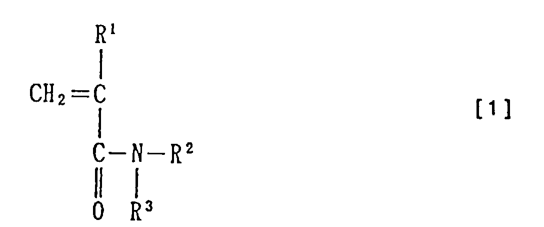 (wherein R¹ is a hydrogen atom or a methyl group; and R² and R³ may be the same or different and are each a hydrogen atom or an alkyl group having 1-5 carbon atoms with a proviso that the sum of the carbon atoms of R² and R³ is 5 or less).

In the above formula [1], the "alkyl group having 1-5 carbon atoms" which may be represented by R² or R³, can have a straight chain or a branched chain. Examples thereof are a methyl group, an ethyl group, an n-propyl group, an isopropyl group, an n-butyl group, an isobutyl group, a tert-butyl group and an amyl group.

Typical examples of the monomer (b) represented by the above general formula [1] are acrylamide, methacrylamide, N-methylacrylamide, N-methylmethacrylamide, N,N-dimethylacrylamide, N,N-dimethylmethacrylamide, N-ethylacrylamide, N-ethylmethacrylamide, N-n-propylacrylamide, N-n-propylmethacrylamide, N-isopropylacrylamide, N-isopropylmethacrylamide and N-n-butylacrylamide. Of these, particularly preferable are acrylamide, methacrylamide, N-methylacrylamide and N-methylmethacrylamide.

### Crosslinkable unsaturated monomer (c)

The polymerizable unsaturated monomer (c) used to form the hydrophilic crosslinked polymer fine particles of the present invention is a component contributing to the crosslinking of the fine particles and is at least one compound selected from (c-1) compounds having, in the molecule, at least two polymerizable double bonds and (c-2) compounds having, in the molecule, at least one functional group selected from hydrolyzable silyl groups and 1,2-epoxy groups and one polymerizable double bond.

The compounds (c-1) having, in the molecule, at least two polymerizable double bonds are preferably those compounds having, in the molecule, two to five, particularly two polymerizable double bonds. Examples thereof are methylenebis(meth)acrylamide; di(meth)acrylates of alkylene glycols preferably of 2-10 carbon atoms, such as ethylene glycol di(meth)acrylate, triethylene glycol di(meth)acrylate, tetraethylene glycol di(meth)acrylate, 1,3-butylene glycol di(meth)acrylate, 1,6-hexanediol di(meth)acrylate and the like; polyhydric alcohol (meth)acrylates such as trimethylolpropane tri(meth)acrylate and the like; divinylbenzene; and allyl (meth)acrylate. Of these, methylenebisacrylamide and methylenebismethacrylamide are preferable in view of the dispersion stability, hydrophilicity, etc. of the resin particles obtained. Herein, "(meth)acrylate" refers to methacrylate and acrylate.

The compounds (c-2) having, in the molecule, at least one, preferably only one functional group selected from hydrolyzable silyl groups and 1,2-epoxy groups 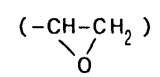 and one polymerizable double bond, include the following compounds. In the present specification, "hydrolyzable silyl group" refers to a group which forms a silanol group (Si-OH) when hydrolyzed, and includes, for example, groups represented by the following formula: 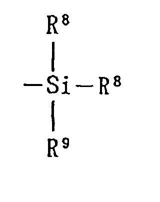 wherein two R⁸s may be the same or different and are each a hydrogen atom, a hydrocarbon group having 1-18, preferably 1-4 carbon atoms, an alkoxy group having 1-4 carbon atoms or an alkoxy-substituted alkoxy group having 2-4 carbon atoms; and R⁹ is an alkoxy group having 1-4 carbon atom or an alkoxy-substituted alkoxy group having 2-4 carbon atoms.

Typical examples of the compounds (c-2) are unsaturated compounds having hydrolyzable silyl groups such as γ-methacryloyloxypropyltrimethoxysilane, γ-acryloyloxypropyltrimethoxysilane, vinyltriethoxysilane, vinyltrimethoxysilane, 2-styrylethyltrimethoxysilane, vinyltris(methoxyethoxy)silane and the like; and unsaturated compounds having 1,2-epoxy groups, such as glycidyl (meth)acrylate, allyl glycidyl ether and the like. Of these, glycidyl methacrylate is particularly preferable.

### Monomer (d)

The monomer (d) used as necessary for forming the polymer fine particles of the present invention is a compound other than the above monomers (a), (b) and (c), which has a polymerizable unsaturated group in the molecule and which is copolymerizable with the monomers (a), (b) and (c).

Typical examples of the monomer (d) are C₁₋₂₄ alkyl or cycloalkyl esters of (meth)acrylic acid, such as methyl (meth)acrylate, ethyl (meth)acrylate, butyl (meth)acrylate, hexyl (meth)acrylate, octyl (meth)acrylate, lauryl (meth)acrylate, cyclohexyl (meth)acrylate and the like; C₂₋₈ hydroxyalkyl esters of (meth)acrylic acid, such as 2-hydroxyethyl (meth)acrylate, hydroxypropyl (meth)acrylate, hydroxybutyl (meth)acrylate and the like; carboxyl group-containing unsaturated monomers such as acrylic acid, methacrylic acid, crotonic acid, itaconic acid, maleic acid, fumaric acid, monobutyl itaconate, monobutyl maleate and the like; polymerizable unsaturated nitriles such as acrylonitrile, methacrylonitrile and the like; aromatic vinyl compounds such as styrene, α-methylstyrene, vinyl toluene, α-chlorostyrene and the like; N-methylolacrylamide and N-methylolmethacrylamide; N-alkoxymethyl(meth)acrylamides whose N-alkoxy moiety has 1-4 carbon atoms, such as N-butoxymethylacrylamide, N-butoxymethylmethacrylamide, N-methoxymethylacrylamide and the like; α-olefins such as ethylene, propylene and the like; diene compounds such as butadiene, isoprene and the like; vinyl esters such as vinyl acetate, vinyl propionate and the like; and vinyl ethers such as ethyl vinyl ether, n-propyl vinyl ether and the like. These compounds can be used singly or in combination of two or more of them. Use of a hydrophobic compound in a large amount must be avoided because it gives polymer fine particles of low hydrophilicity.

When there is used, as the monomer (d), a compound having a functional group reactive with the at least one functional group of the monomer (c-2), crosslinking can be allowed to take place by a reaction between the at least one functional group of the monomer (c-2) and the functional group of the monomer (d). Incidentally, when the at least one functional group of the monomer (c-2) is a hydrolyzable silyl group, crosslinking is possible by a reaction between these hydrolyzable silyl groups.

The functional group reactive with the at least one functional group of the monomer (c-2), which the monomer (d) can have, can be exemplified by those shown in the following table.

| | |
|---|---|
| Functional group of monomer (c-2) | Functional group reactive with functional group of compound (c-2), which monomer (d) can have |
| Hydrolyzable silyl group | Hydroxyl group, silanol group, hydrolyzable silyl group, etc. |
| 1,2-Epoxy group | Carboxyl group, amino group, hydroxyl group, etc. |

When there is used, as the monomer (c), a compound (c-2) having a 1,2-epoxy group, the whole or part of the monomer (d) must be a polymerizable unsaturated compound having, in the molecule, a functional group (e.g. carboxyl group, amino group or hydroxyl group) reactive with the 1,2-epoxy group, in order to obtain crosslinked polymer fine particles of the present invention.

### Production of hydrophilic crosslinked polymer fine particles

The hydrophilic crosslinked polymer fine particles of the present invention can be produced by polymerizing the hydrophilic monomer (a), (meth)acrylamide type monomer (b), crosslinkable unsaturated monomer (c) and, as necessary, monomer (d) all mentioned above, in the absence of any dispersion stabilizer in a water-miscible organic solvent capable of dissolving the above monomers but substantially incapable of dissolving the copolymer formed or in a mixed solvent of the water-miscible organic solvent and water.

In the polymerization, the proportions of the monomers used can be the same as those desired for the copolymer formed, and can be as follows, for example,
Hydrophilic monomer (a)
   2-50% by weight, preferably 2-40% by weight, more preferably 5-35% by weight
(Met)acrylamide type monomer (b)
   20-97% by weight, preferably 40-97% by weight, more preferably 40-90% by weight
Crosslinkable unsaturated monomer (c)
   1-30% by weight, preferably 1-20% by weight, more preferably 1-15% by weight
Monomer (d)
   0-50% by weight, preferably 0-40% by weight, more preferably 0-35% by weight

When the amount of the hydrophilic monomer (a) is less than 2% by weight, it is difficult to sufficiently stabilize the polymer particles formed, and agglomerates are easily formed during polymerization or during storage. When the amount is more than 50% by weight, the polymer particles formed dissolve easily in the reaction solvent and a large portion of the polymer formed is dissolved, making it impossible to form polymer fine particles satisfactorily.

When the amount of the (meth)acrylamide type monomer (b) is less than 20% by weight, the polymer formed dissolves easily in the reaction solvent, making it difficult to form polymer fine particles. When the amount is more than 97% by weight, the stability of polymer fine particles during polymerization and during storage is insufficient and agglomerates are formed easily.

When the amount of the crosslinkable unsaturated monomer (c) is less than 1% by weight, the crosslinking degree of the polymer particles formed is low and, when other solvent is added later, the polymer particles may cause swelling and dissolution depending upon the solvent added. When the amount is more than 30% by weight, agglomerates are formed in a large amount during polymerization, making it difficult to produce desired polymer fine particles stably.

The hydrophilic monomer (a) used in production of the polymer fine particles of the present invention contains, in the molecule, a polyoxyalkylene or polyvinylpyrrolidone chain of high hydrophilicity and plays a role of dispersing and stabilizing the polymer formed. Therefore, no use of any dispersion stabilizer is necessary in production of the polymer fine particles of the present invention.

In production of the polymer fine particles of the present invention, there is used, as the reaction solvent, a water-miscible organic solvent capable of dissolving the monomers mixture but substantially incapable of dissolving the copolymer formed, or a mixed solvent of the above water-miscible organic solvent and water. Herein, "water-miscible" refers to "soluble in water at 20°C in any proportion".

The water-miscible organic solvent can be any organic solvent as long as it satisfies the above requirement. However, particularly preferred from the standpoint of the polymerization stability is a water-miscible organic solvent containing at least 50% by weight, particularly at least 70% by weight of an organic solvent having a solubility parameter (SP) of generally 9-11, particularly 9.5-10.7. Incidentally, "solubility parameter (SP)" used in the present specification is based on the description made in Journal of Paint Technology, Vol. 42, No. 541, pp. 76-118 (Feb., 1970).

Examples of the organic solvent having a SP of the above range are alkylene glycol monoalkyl ethers such as ethylene glycol monobutyl ether, propylene glycol monomethyl ether, ethylene glycol monoethyl ether, diethylene glycol monoethyl ether, diethylene glycol monobutyl ether and the like. Of these, particularly preferable are ethylene glycol monobutyl ether and propylene glycol monomethyl ether.

The water-miscible organic solvent can contain, besides the organic solvent having a SP of 9-11, other water-miscible or water-immiscible organic solvent. Preferable examples of the other organic solvent are water-miscible organic solvents such as methanol, ethanol, isopropyl alcohol and the like. Desirably, the other organic solvent is used in an amount of 50% by weight or less, particularly 30% by weight or less based on the total amount of the organic solvents.

When a mixed solvent of the water-miscible organic solvent and water is used as the reaction solvent, the preferable content of water in the mixed solvent is generally 60 parts by weight or less, particularly 40 parts by weight or less per 100 parts by weight of the water-miscible organic solvent, in view of the polymerization stability of polymer formed, etc.

The copolymerization of the hydrophilic monomer (a), the (meth)acrylamide type monomer (b), the crosslinkable unsaturated monomer (c) and the monomer (d) is conducted generally in the presence of a radical polymerization initiator. The radical polymerization initiator can be one known per se. Examples thereof are peroxides such as benzoyl peroxide, lauroyl peroxide, di-tert-butyl peroxide, cumene hydroperoxide, tert-butyl peroctoate, tert-butyl peroxy-2-ethylhexanonate and the like; azo compounds such as 2,2'-azobisisobutyronitrile, 2,2'-azobis(2,4-dimethylvaleronitrile), 2,2'-azobis(4-methoxy-2,4-dimethylvaleronitrile), dimethyl 2,2'-azobisisobutyrate, 4,4'-azobis(4-cyanopentanoic acid) and the like; amidine compounds such as 2,2'-azobis(2-amidinopropane) dihydrochloride, 2,2'-azobis(N,N'-dimethyleneisobutylamidine), 2,2'-azobis(N,N'-dimethyleneisobutylamidine) di hydrochloride and the like; persulfates such as potassium persulfate and ammonium persulfate and the like; and the combinations of the persulfate with sodium thiosulfate, an amine or the like. These initiators can be used singly or in combination of two or more of them. The amount of the radical polymerization initiator used can be generally 0.2-5% by weight based on the total amount of the monomers.

The polymerization temperature can be varied depending upon the kind of the polymerization initiator used, etc., but an appropriate polymerization temperature is generally about 50 - about 160°C , particularly 70-160°C . The reaction time can be about 0.1-10 hours.

There is no particular restriction as to the particle diameters of the present polymer fine particles produced as above. However, it is preferable that the polymer fine particles have an average particle diameter of generally 0.03-1 µm, preferably 0.05-0.6 µm in view of the stability of the polymer fine particles formed, the prevention of formation of agglomerates, etc. This average particle diameter can be measured by the use of a particle diameter tester, for example, Coulter Model N4MD (a product of Coulter Co.).

The polymer fine particles of the present invention have, at the surfaces, the chemically bonded polyoxyalkylene or polyvinylpyrrolidone chains derived from the monomer (a), with the chains oriented outward. Therefore, the polymer fine particles, although containing no dispersion stabilizer, are highly superior in polymerization stability in water-miscible organic solvent or in mixed solvent of said water-miscible organic solvent and water, as well as in dispersion stability during storage, and their surfaces are hydrophilic.

Further, the present polymer fine particles are crosslinked inside the particles owing to the presence of the monomer (c) units. Therefore, the polymer fine particles can hold the shape even in a medium (e.g. an aqueous coating) containing a large amount of water or even when heated (the particles are not easily melted by heating).

The present polymer fine particles can find applications in hydrophilizing agent, liquid crystal spacer, column filler, non-staining coating, etc.

The hydrophilic crosslinked polymer fine particles of the present invention can be made, in one preferable application, into a hydrophilic film-forming coating composition by mixing with an water-miscible film-forming resin in an aqueous medium substantially incapable of dissolving the polymer fine particles but capable of dissolving or dispersing the water-miscible film-forming resin.

The water-miscible film-forming resin used in the preparation of the above coating composition can be any resin as long as it does not significantly impair the hydrophilicity of the polymer fine particles, can be dissolved in the aqueous medium or dispersed therein in fine particles (e.g. in the form of an emulsion), and can form a continuous resin film on the surface of the material coated. As the water-miscible film-forming resin, there can be used, for example, a polyvinyl alcohol, a polycarboxymethyl cellulose, an aqueous acrylic resin emulsion, an aqueous polyester emulsion, an aqueous polyurethane emulsion and an ethylene-acrylic acid ionomer resin.

The amount of the water-miscible film-forming resin used can be varied over a wide range depending upon the application of the coating composition, but the resin is preferably used in a weight ratio of hydrophilic crosslinked polymer fine particles/water-miscible film-forming resin, of generally 10/90 to 90/10, particularly 15/85 to 80/20, more particularly 20/80 to 70/30.

As the aqueous medium used in the hydrophilic film-forming coating composition, there can be used water, or a mixed solvent of water and the above-mentioned water-miscible organic solvent wherein the content of water is 50% by weight or more, preferably 70% by weight or more.

The solid content of the coating composition is not particularly restricted, but can be generally 3-60% by weight, preferably 5-50% by weight.

The coating composition may further comprise, as necessary, coating additives such as neutralizing agent, surfactant, curing agent, levelling agent, anti-fungal agent, coloring pigment, rust-preventive pigment, extender pigment and the like. The surfactant includes, for example, a salt of a dialkylsulfosuccinic acid ester and an alkylene oxide silane compound. The curing agent includes, for example, an amino-aldehyde resin, a blocked isocyanate compound, a polyepoxy compound and a chelate compound of a metal selected from Ti, Zr and Al.

The coating composition of the present invention can form a hydrophilic film by being coated on a material to be coated and being dried and can therefore be widely used in applications wherein the formation of a hydrophilic film is desired. The material to be coated is not particularly restricted and includes metals (e.g. iron, aluminum, zinc, copper, tin and metal-plated steel); plastics; glass; wood; and so forth. The film thickness in which the coating composition is coated, is not particularly restricted, either, but can be generally 0.5-5.0 µm as dried film thickness when the material to be coated is an aluminum fin of heat exchanger.

As described above, the hydrophilic crosslinked polymer fine particles are superior in polymerization stability in solvent as well as in dispersion stability during storage, undergo no adverse effect by dispersion stabilizer owing to no use of the stabilizer, and can be suitably used for formation of a hydrophilic film.

The hydrophilic film-forming aqueous coating composition containing the hydrophilic crosslinked polymer fine particles of the present invention, when coated on a material to be coated, can form fine unevenness thereon owing to the presence of hydrophilic resin fine particles and moreover can exhibit excellent hydrophilicity because the fine particles themselves have hydrophilicity. When the coating composition is coated on an aluminum fin to form a film thereon and the resulting fin is subjected to molding, as compared with a case using a conventional coating containing inorganic particles of silica or the like, the abrasion of mold during molding is less because the hydrophilic resin fine particles are softer than the inorganic particles.

The present invention is hereinafter described more specifically by way of Examples. In the followings, parts and % are by weight in all cases.

### Example 1

300 parts of propylene glycol monomethyl ether was placed in a flask equipped with a nitrogen inlet tube, an Allihn condenser, a dropping funnel and a mechanical stirrer, and heated to 80°C. Then, the following mixture of monomers, water and and an initiator was dropped into the flask in 5 hours. After the dropping, the resulting mixture was kept at 80°C for 2 hours.

| | |
|---|---|
| Compound of following compound (1) | 30 parts |
| Acrylamide | 37 parts |
| N-methylolacrylamide | 13 parts |
| Methylenebisacrylamide | 7 parts |
| 2-Hydroxyethyl methacrylate | 13 parts |
| Propylene glycol monomethyl ether | 200 parts |
| Deionized water | 67 parts |
| Ammonium persulfate | 1.5 parts |

The resulting dispersion was an opaque white stable dispersion free from any agglomerate, having a solid content of 15% and an average particle diameter (of resin particles) of 133 nm.

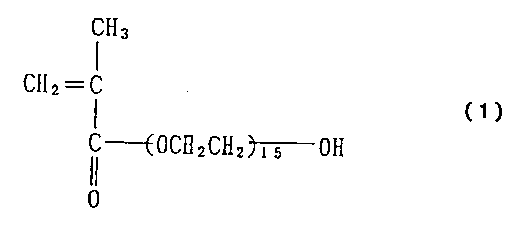

### Example 2

170 parts of ethylene glycol monobutyl ether was placed in a flask equipped with a nitrogen inlet tube, an Allihn condenser, a dropping funnel and a mechanical stirrer, and heated to 80°C. Then, the following mixture of monomers, water and and an initiator was dropped into the flask in 5 hours. After the dropping, the resulting mixture was kept at 80°C for 2 hours.

| | |
|---|---|
| Blemmer PME-4000 (∗1) | 10 parts |
| Acrylamide | 70 parts |
| Methylenebisacrylamide | 20 parts |
| Ethylene glycol monobutyl ether | 150 parts |
| Deionized water | 80 parts |
| Ammonium persulfate | 1.5 parts |

| | |
|---|---|
| ∗1 A compound of the following formula (2) (a product of Nippon Oils and Fats Co., Ltd.) | |

The resulting dispersion was an opaque white stable dispersion free from any agglomerate, having a solid content of 20% and an average particle diameter (of resin particles) of 320 nm. 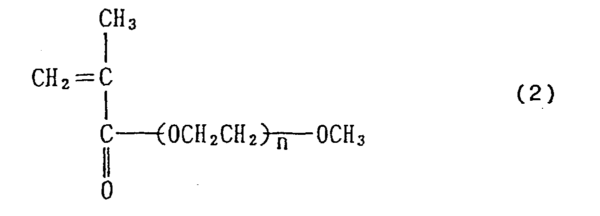 (n is 98 or an average)

### Production Example 1

60 parts of propylene glycol monomethyl ether was fed into a flask equipped with a nitrogen inlet tube, a condenser, a dropping funnel and a mechanical stirrer, and heated to 90°C. Thereto were dropwise added, simultaneously and in 2 hours, a solution consisting of 100 parts of N-vinylpyrrolidone, 2 parts of 2,2'-azobis(isobutyronitrile) and 5 parts of propylene glycol monomethyl ether and a solution consisting of 5 parts of mercaptoacetic acid and 30 parts of propylene glycol monomethyl ether. 1 hour after the dropwise addition, a solution consisting of 1 part of 2,2'-azobis(2,4-dimethylvaleronitrile) and 10 parts of propylene glycol monomethyl ether was dropwise added in 1 hour. The mixture was stirred for 1 hour and then cooled to obtain a polyvinylpyrrolidone solution having a solid content of 50%.

### Production Example 2

To 800 parts of the polyvinylpyrrolidone solution having a solid content of 50%, obtained in Production Example 1 were added 26.6 parts of glycidyl methacrylate and 1.8 parts of tetraethylammonium bromide. The mixture was stirred at 110°C for 7 hours to obtain a polyvinylpyrrolidone macromonomer solution (solid content: 52%) represented by the following formula 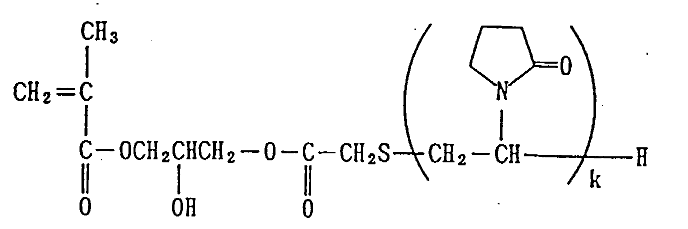 (wherein k has an average value of about 25).

### Example 3

151.5 parts of propylene glycol monomethyl ether was placed in a flask equipped with a nitrogen inlet tube, an Allihn condenser, a dropping funnel and a mechanical stirrer, and heated to 80°C . Then, the following mixture of monomers, water and and an initiator was dropped into the flask in 5 hours. After the dropping, the resulting mixture was kept at 80°C for 2 hours.

| | |
|---|---|
| Polyvinylpyrrolidone macromonomer solution having a solid content of 52%, obtained in Production Example 2 | 38.5 parts |
| Acrylamide | 70 parts |
| 1,6-Hexanediol diacrylate | 10 parts |
| Propylene glycol monomethyl ether | 281.5 parts |
| Deionized water | 100 parts |
| 2,2'-Azobisisobutyronitrile | 2 parts |

The resulting dispersion was an opaque white stable dispersion free from any agglomerate, having a solid content of 20% and an average particle diameter (of resin particles) of 280 nm.

### Example 4

The operation of Example 2 was repeated except that the ethylene glycol monobutyl ether (170 parts) placed first in the flask was changed to propylene glycol monomethyl ether (170 parts) and that the mixture dropped into the flask was changed to the following mixture of monomers, a solvent and an initiator.

| | |
|---|---|
| Blemmer PME-4000 | 5 parts |
| Acrylamide | 93 parts |
| Methylenebisacrylamide | 2 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 800 nm.

### Example 5

Polymerization was conducted in the same manner as in Example 4 except that the mixture dropped into the flask was changed to the following mixture of monomers, a solvent and an initiator.

| | |
|---|---|
| Blemmer PME-4000 | 40 parts |
| Acrylamide | 55 parts |
| Methylenebisacrylamide | 5 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 68 nm.

### Example 6

Polymerization was conducted in the same manner as in Example 4 except that the mixture dropped into the flask was changed to the following mixture of monomers, a solvent and an initiator.

| | |
|---|---|
| Blemmer PME-4000 | 30 parts |
| Acrylamide | 40 parts |
| Methylenebisacrylamide | 10 parts |
| N-methylolacrylamide | 20 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 162 nm.

### Example 7

Polymerization was conducted in the same manner as in Example 4 except that the mixture dropped into the flask was changed to the following mixture of monomers, a solvent and an initiator.

| | |
|---|---|
| Blemmer PME-4000 | 30 parts |
| Acrylamide | 60 parts |
| KBM-503 (a product of SHIN-ETSU CHEMICAL CO., LTD. | 10 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 128 nm.

### Example 8

Polymerization was conducted in the same manner as in Example 4 except that the mixture dropped into the flask was changed to the following mixture of monomers, a solvent and an initiator.

| | |
|---|---|
| Blemmer PME-4000 | 30 parts |
| Acrylamide | 50 parts |
| Acrylic acid | 10 parts |
| Glycidyl methacrylate | 10 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 163 nm.

### Example 9

Polymerization was conducted in the same manner as in Example 4 except that the mixture dropped into the flask was changed to the following mixture of monomers, a solvent and an initiator.

| | |
|---|---|
| Blemmer PME-4000 | 30 parts |
| Methacrylamide | 60 parts |
| Allyl methacrylate | 10 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 150 nm.

### Comparative Example 1

Polymerization was conducted in the same manner as in Example 1 except that the mixture dropped into the flask was changed to the following mixture of monomers, a solvent and an initiator.

| | |
|---|---|
| Acrylamide | 37 parts |
| N-methylolacrylamide | 13 parts |
| Methylenebisacrylamide | 7 parts |
| 2-Hydroxyethyl methacrylate | 13 parts |
| Propylene glycol monomethyl ether | 200 parts |
| Deionized water | 67 parts |
| Ammonium persulfate | 1.5 parts |

The resulting polymer was large agglomerates and no dispersion of resin particles could be obtained.

### Comparative Example 2

Polymerization was conducted in the same manner as in Example 2 except that the Blemmer PME-4000 (10 parts) was replaced by Polyethylene Glycol 4000 (10 parts) (a polyethylene glycol having a molecular weight of about 4,000, a reagent manufactured by WAKO PURE CHEMICAL INDUSTRIES, LTD.).

The resulting polymer was large agglomerates and no dispersion of resin particles could be obtained.

### Comparative Example 3

Polymerization was conducted in the same manner as in Example 3 except that the polyvinylpyrrolidone macromonomer (38.5 parts) having a solid content of 52%, obtained in Production Example 2 was replaced by the polyvinylpyrrolidone solution (40 parts) having a solid content of 50%, obtained in Production Example 1. The resulting polymer was large agglomerates and no dispersion of resin particles could be obtained.

### Comparative Example 4

Polymerization was conducted in the same manner as in Example 4 except that the mixture dropped into the flask was changed to the following mixture of monomers, a solvent and an initiator.

| | |
|---|---|
| Blemmer PME-4000 | 1 part |
| Acrylamide | 89 parts |
| Methylenebisacrylamide | 10 parts |
| Propylene glycol monomethyl ether | 150 parts |
| Deionized water | 80 parts |
| Ammonium persulfate | 1.5 parts |

The resulting polymer was large agglomerates and no stable dispersion could be obtained.

### Comparative Example 5

Polymerization was conducted in the same manner as in Example 4 except that the mixture dropped into the flask was changed to the following mixture of monomers, a solvent and an initiator.

| | |
|---|---|
| Blemmer PME-4000 | 55 parts |
| Acrylamide | 40 parts |
| Methylenebisacrylamide | 5 parts |
| Propylene glycol monomethyl ether | 150 parts |
| Deionized water | 80 parts |
| Ammonium persulfate | 1.5 parts |

The resulting polymer was not granulated and gelled.

### Comparative Example 6

Polymerization was conducted in the same manner as in Example 4 except that the mixture dropped into the flask was changed to the following mixture of monomers, a solvent and an initiator.

| | |
|---|---|
| Blemmer PME-4000 | 30 parts |
| Acrylamide | 15 parts |
| Methylenebisacrylamide | 20 parts |
| 2-Hydroxyethyl methacrylate | 35 parts |
| Propylene glycol monomethyl ether | 150 parts |
| Deionized water | 80 parts |
| Ammonium persulfate | 1.5 parts |

The resulting polymer was not granulated and gelled.

### Comparative Example 7

Polymerization was conducted in the same manner as in Example 4 except that the mixture dropped into the flask was changed to the following mixture of monomers, a solvent and an initiator.

| | |
|---|---|
| Blemmer PME-4000 | 20 parts |
| Acrylamide | 80 parts |
| Propylene glycol monomethyl ether | 150 parts |
| Deionized water | 80 parts |
| Ammonium persulfate | 1.5 parts |

The resulting dispersion was an opaque white stable dispersion having a solid content of 20% and an average particle diameter (of resin particles) of 167 nm. The dispersion, however, was soluble in water.

### Comparative Example 8

Polymerization was conducted in the same manner as in Example 4 except that the mixture dropped into the flask was changed to the following mixture of monomers, a solvent and an initiator.

| | |
|---|---|
| Blemmer PME-4000 | 20 parts |
| Acrylamide | 40 parts |
| 1,6-Hexanediol diacrylate | 40 parts |
| Propylene glycol monomethyl ether | 320 parts |
| Deionized water | 80 parts |
| Ammonium persulfate | 1.5 parts |

The resulting polymer was large agglomerates and no stable dispersion could be obtained.

### Comparative Example 9

Polymerization was conducted in the same manner as in Example 4 except that the mixture dropped into the flask was changed to the following mixture of monomers, a solvent and an initiator.

| | |
|---|---|
| Blemmer PME-4000 | 20 parts |
| Acrylamide | 15 parts |
| Methyl methacrylate | 55 parts |
| Methylenebisacrylamide | 10 parts |
| Propylene glycol monomethyl ether | 220 parts |
| Deionized water | 180 parts |
| Ammonium persulfate | 1.5 parts |

The resulting dispersion was an opaque white dispersion having a solid content of 20% and an average particle diameter (of resin particles) of 257 nm.

### Preparation of hydrophilic film-forming coating compositions

Using the dispersions of resin fine particles, obtained in Examples 1-9 and Comparative Examples 7 and 9, the hydrophilic film-forming coating compositions of Examples 10-20 and Comparative Examples 10-11 shown below were prepared.

### Examples 10-20 and Comparative Examples 10-11

Hydrophilic film-forming coating compositions were prepared by mixing and stirring the following components in the following amounts.
An aqueous PVA solution (solid content: 16%) obtained by dissolving, in water, a almost complete- ly saponified PVA [Poval PVA-117 (trade name) manu- factured by Kuraray Co., Ltd.]
   100 parts (16 parts as solid)
Diisopropoxy-bis(acetylacetonato)titanium
   1 part
Dispersion of resin fine particles, obtained in one of Examples 1-9 and Comparative Examples 7 and 9
   Parts (as solid) shown in Table 1

### <Test methods>

### Preparation of coated plates for test

Each of the hydrophilic film-forming coating compositions obtained in Examples 7-14 and Comparative Examples 9-10 was coated on a chromate-treated aluminum plate (A1050; thickness: 0.1 mm) in a film thickness (as dried) of 1 µm by the use of a bar coater. The resulting aluminum plate was subjected to baking for 45 seconds in a hot air of 220°C so that the temperature of the aluminum plate reached 215°C, whereby a coated plate was obtained. A volatile press oil was applied onto the coated plate, followed by drying at 150°C for 5 minutes, to obtain various coated plates for test. Each of the coated plates for test was tested for hydrophilicty (water wettability and contact angle of water drop) according to the following test methods. The test results are shown in Table 1.

### Tests for hydrophilicity

Each of the following two coated plates was tested-for water wettability and contact angle of water drop according to the following methods.
(1) A coated plate for test obtained above
(2) A coated plate obtained by immersing the coated plate (1) in a running tap water [running rate = 15 kg/hr per m² of the coated plate (1)] for 7 hours, pulling it up, drying it in a room for 17 hours (this wet and dry process is hereinafter referred to as wet and dry cycle), and repeating the wet and dry cycle five times (five cycles).

### Water wettability

A coated plate (1) or (2) was immersed in a tap water placed in a beaker, for 10 seconds and then pulled up. Immediately, the water-wet condition of the plate surface was examined visually and rated according to the following yardstick.
- ○ :: The whole plate surface is wetted with water and, even after 10 seconds from the pulling-up of plate, there is no unevenness of water on the surface.
- Δ :: The whole plate surface is wetted with water right after the pulling-up of plate but, after 10 seconds therefrom, water is present mostly on the center of the plate by water movement from the plate edge towards the center.
- X :: Water drops are formed right after the pulling-up of plate and the whole plate surface is not wetted.

### Contact angle of water drop

The contact angle between coated plate (1) or (2) and water was measured by drying the plate at 80°C for 5 minutes and then subjecting the plate to contact angle measurement using a contact angle meter DCAA (a product of Kyowa Kagaku K.K. ).

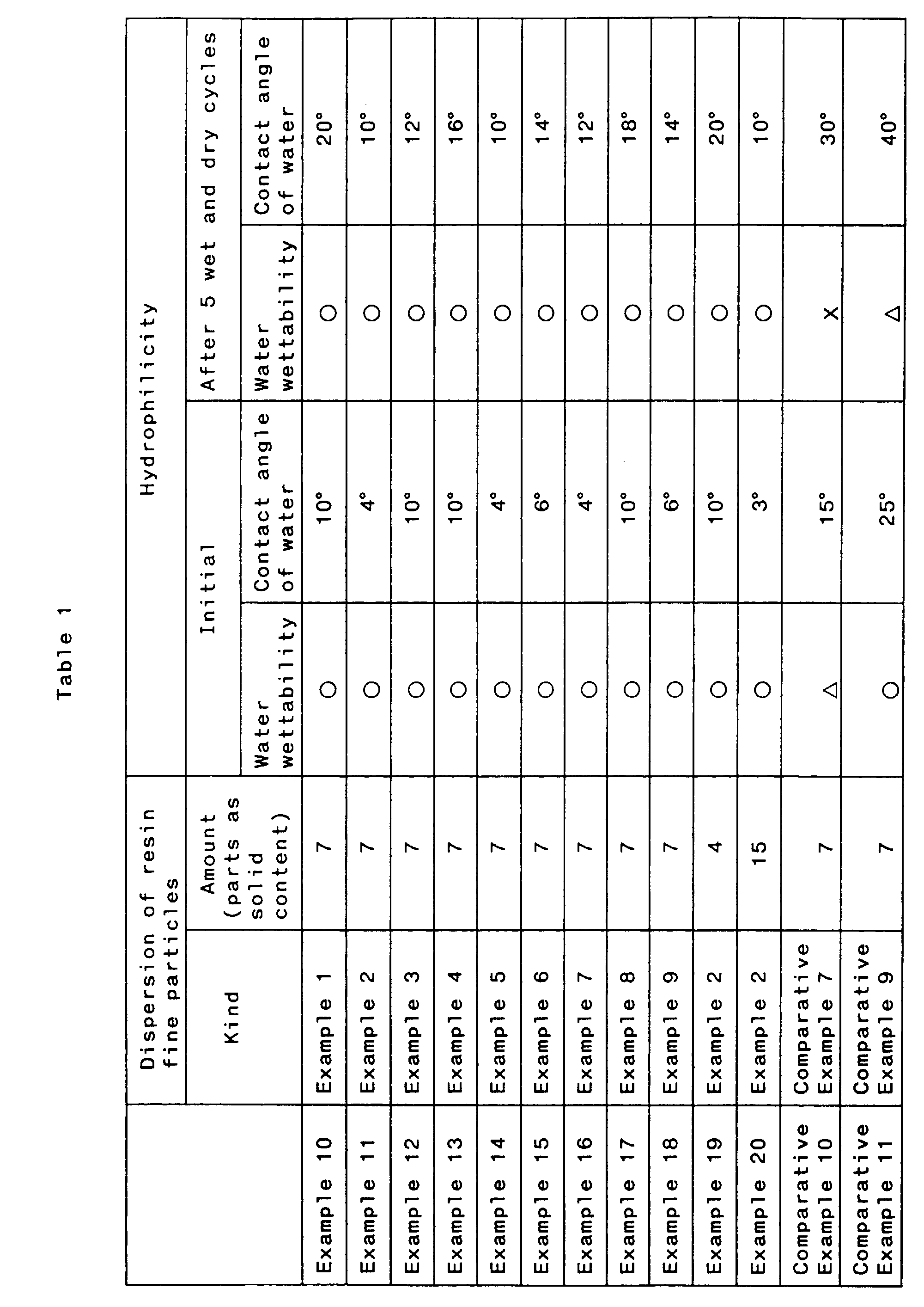

## Claims

1. Hydrophilic crosslinked polymer fine particles made of a copolymer composed of:
2-50% by weight of (a) a hydrophilic monomer having, in the molecule, at least one polymerizable double bond and a polyoxyalkylene or polyvinylpyrrolidone chain,
20-97% by weight of (b) at least one (meth)acrylamide type monomer selected from the group consisting of the compounds represented by the following general formula [1]: 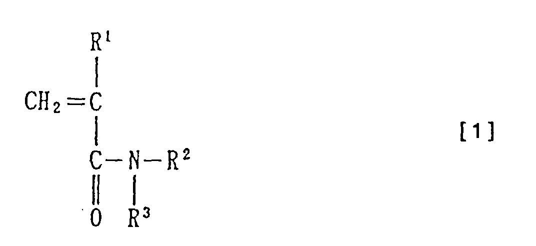 (wherein R¹ is a hydrogen atom or a methyl group; and R² and R³ may be the same or different and are each a hydrogen atom or an alkyl group having 1-5 carbon atoms with a proviso that the sum of the carbon atoms of R² and R³ is 5 or less),
1-30% by weight of (c) a crosslinkable unsaturated monomer selected from the group consisting of compounds having, in the molecule, at least two polymerizable double bonds, and compounds having, in the molecule, at least one functional group selected from hydrolyzable silyl groups and 1,2-epoxy groups and one polymerizable double bond, and
0-50% by weight of (d) a monomer other than the above (a), (b) and (c), having a polymerizable unsaturated group in the molecule.

2. Polymer fine particles according to Claim 1, wherein the hydrophilic monomer (a) has one polymerizable double bond in the molecule.

3. Polymer fine particles according to Claim 1, wherein the hydrophilic monomer (a) is selected from the group consisting of the compounds represented by the following general formulas [2], [3] and [4]: 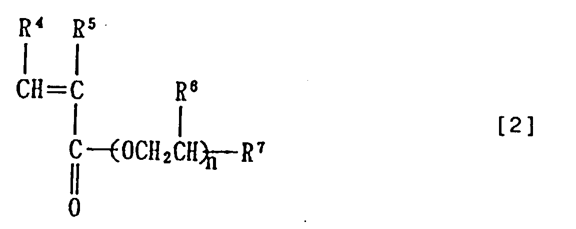 [wherein R⁴, R⁵ and R⁶ may be the same or different and are each a hydrogen atom or a methyl group; n is an integer of 10-200; R⁷ is -OH, -OCH₃, -SO₃H or -SO₃⁻M⁺ (where M⁺ is Na⁺, K⁺, Li⁺, NH₄⁺ or an organic ammonium group); and R⁶s in the n groups represented by: 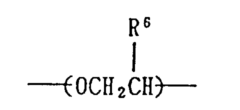 may be the same or different], 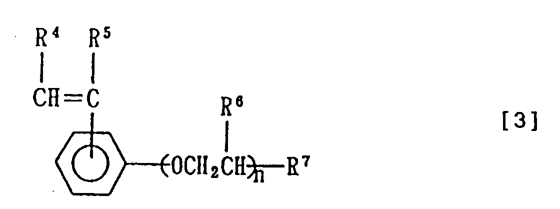 (wherein R⁴, R⁵, R⁶, R⁷ and n have the same definitions as given above), 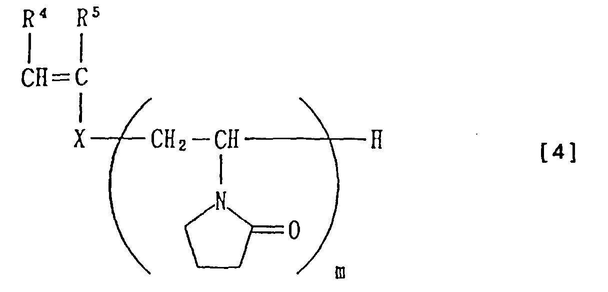 (wherein R⁴ and R⁵ have the same definitions as given above; X is a bivalent organic group having 5-10 carbon atoms, which may contain an O, S or N atom(s); and m is an integer of 10-100).

4. Polymer fine particles according to Claim 3, wherein the hydrophilic monomer (a) are a compound of formula [2] or [3].

5. Polymer fine particles according to Claim 4, wherein n is an integer of 30-200.

6. Polymer fine particles according to Claim 4, wherein R⁴ is a hydrogen atom, R⁵ is a hydrogen atom or a methyl group, and R⁶ is a hydrogen atom.

7. Polymer fine particles according to Claim 1, wherein the (meth)acrylamide type monomer (b) is selected from the group consisting of acrylamide, methacrylamide, N-methylacrylamide, N-methylmethacrylamide, N,N-dimethylacrylamide, N,N-dimethylmethacrylamide, N-ethylacrylamide, N-ethylmethacrylamide, N-n-propylacrylamide, N-n-propylmethacrylamide, N-isopropylacrylamide, N-isopropylmethacrylamide and N-n-butylacrylamide.

8. Polymer fine particles according to Claim 1, wherein the crosslinkable unsaturated monomer (c) has two to five polymerizable double bonds in the molecule.

9. Polymer fine particles according to Claim 8, wherein the crosslinkable unsaturated monomer (c) is selected from the group consisting of methylenebis-(meth)acrylamide, ethylene glycol di(meth)acrylate, triethylene glycol di(meth)acrylate, tetraethylene glycol di(meth)acrylate, 1,3-butylene glycol di(meth)acrylate, 1,6-hexanediol di(meth)acrylate, trimethylolpropane tri(meth)acrylate, divinylbenzene and allyl (meth)acrylate.

10. Polymer fine particles according to Claim 1, wherein the crosslinkable unsaturated monomer (c) is a compound having, in the molecule, one functional group selected from a hydrolyzable silyl group and a 1,2-epoxy group and one polymerizable double bond.

11. Polymer fine particles according to Claim 10, wherein the crosslinkable unsaturated monomer (c) is selected from the group consisting of γ-methacryloyloxypropyltrimethoxysilane, γ-acryloyloxypropyltrimethoxysilane, vinyltriethoxysilane, vinyltrimethoxysilane, 2-styrylethyltrimethoxysilane, vinyltris(methoxyethoxy)-silane, glycidyl (meth)acrylate and allyl glycidyl ether.

12. Polymer fine particles according to Claim 1, wherein the crosslinkable unsaturated monomer (c) is selected from the group consisting of methylenebisacrylamide, methylenebismethacrylamide and glycidyl methacrylate.

13. Polymer fine particles according to Claim 1, wherein the monomer (d) is selected from the group consisting of a C₁₋₂₄ alkyl or cycloalkyl ester of (meth)acrylic acid, a C₂₋₈ hydroxyalkyl ester of (meth)acrylic acid, a carboxyl group-containing unsaturated monomer, a polymerizable unsaturated nitrile, an aromatic vinyl compound, a N-C₁₋₅ alkoxymethyl (meth)acrylamide, an α-olefin, a diene compound, a vinyl ester and a vinyl ether.

14. Polymer fine particles according to Claim 1, made of a copolymer composed of:
2-40% by weight of the hydrophilic monomer (a),
40-97% by weight of the (meth)acrylamide type monomer (b),
1-20% by weight of the crosslinkable unsaturated monomer (c), and
0-40% by weight of the monomer (d).

15. Polymer fine particles according to Claim 1, having an average particle diameter of 0.03-1 µm.

16. Polymer fine particles according to Claim 1, which are produced by polymerizing the hydrophilic monomer (a), the (meth)acrylamide type monomer (b), the crosslinking unsaturated monomer (c) and, as necessary, the monomer (d) in the absence of any dispersion stabilizer in a water-miscible organic solvent capable of dissolving the above monomers but substantially incapable of dissolving the copolymer formed or in a mixed solvent of said water-miscible organic solvent and water.

17. A process for producing hydrophilic crosslinked polymer fine particles having an average particle diameter of 0.03-1 µm, which process comprises polymerizing:
2-50% by weight of (a) a hydrophilic monomer having, in the molecule, at least one polymerizable double bond and a polyoxyalkylene or polyvinylpyrrolidone chain,
20-97% by weight of (b) at least one (meth)-acrylamide type monomer selected from the group consisting of the compounds represented by the following general formula [1]: 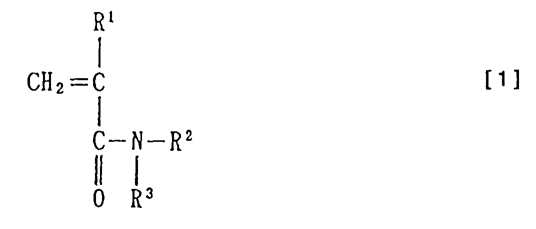 (wherein R¹ is a hydrogen atom or a methyl group; and R² and R³ may be the same or different and are each a hydrogen atom or an alkyl group having 1-5 carbon atoms with a proviso that the sum of the carbon atoms of R² and R³ is 5 or less),
1-30% by weight of (c) a crosslinkable unsaturated monomer selected from the group consisting of compounds having, in the molecule, at least two polymerizable double bonds, and compounds having, in the molecule, at least one functional group selected from hydrolyzable silyl groups and 1,2-epoxy groups and one polymerizable double bond, and
0-50% by weight of (d) a monomer other than the above (a), (b) and (c), having a polymerizable unsaturated group in the molecule,
in the absence of any dispersion stabilizer in a water-miscible organic solvent capable of dissolving the above monomers but substantially incapable of dissolving the copolymer formed or in a mixed solvent of said water-miscible organic solvent and water.

18. A process according to Claim 17, wherein the water-miscible organic solvent has a solubility parameter of 9-11.

19. A process according to Claim 17, wherein the polymerization is conducted at a temperature of 90-160°C .

20. A hydrophilic film-forming coating composition comprising:
hydrophilic crosslinked polymer fine particles according to Claim 1,
an water-miscible film-forming resin, and
an aqueous medium substantially incapable of dissolving said polymer fine particles but capable of dissolving or dispersing said water-miscible film-forming resin.

21. A composition according to Claim 20, wherein the water-miscible film-forming resin is selected from the group consisting of a polyvinyl alcohol, a polycarboxymethyl cellulose, an aqueous acrylic resin emulsion, an aqueous polyester emulsion, an aqueous polyurethane emulsion and an ethylene-acrylic acid ionomer resin.

22. A composition according to Claim 20, wherein the weight ratio of the hydrophilic crosslinked polymer fine particles/the water-miscible film-forming resin is 10/90 to 90/10.

23. An article coated with a hydrophilic film-forming coating composition according to Claim 20.

## Patentansprüche

1. Hydrophile vernetzte Polymerfeinteilchen, hergestellt aus einem Copolymeren, das aus folgendem besteht:
(a) 2 bis 50 Gew.-% eines hydrophilen Monomeren, das im Molekül mindestens eine polymerisierbare Doppelbindung und eine Polyoxyalkylen- oder Polyvinylpyrrolidonkette hat,
(b) 20 bis 97 Gew.-% mindestens eines Monomeren vom (Meth)acrylamidtyp, ausgewählt aus der Gruppe bestehend aus Verbindungen der folgenden allgemeinen Formel [1]: 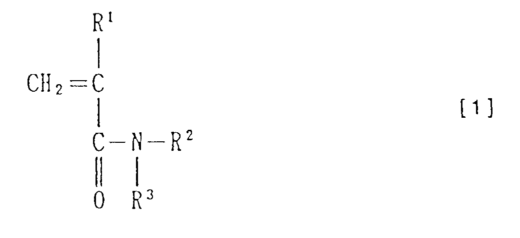 (worin R¹ für ein Wasserstoffatom oder eine Methylgruppe steht und R² und R³ gleich oder verschieden sein können und jeweils ein Wasserstoffatom oder eine Alkylgruppe mit 1 bis 5 Kohlenstoffatomen bedeuten, mit der Maßgabe, daß die Summe der Kohlenstoffatome von R² und R³ 5 oder weniger ist),
(c) 1 bis 30 Gew.-% eines vernetzbaren ungesättigten Monomeren, ausgewählt aus der Gruppe bestehend aus Verbindungen, die im Molekül mindestens zwei polymerisierbare Doppelbindungen haben und Verbindungen, die im Molekül mindestens eine funktionelle Gruppe, ausgewählt aus hydrolysierbaren Silylgruppen und 1,2-Epoxygruppen, und eine polymerisierbare Doppelbindung haben und
(d) 0 bis 50 Gew.-% eines anderen Monomeren als oben unter (a), (b) und (c) angegeben, das im Molekül eine polymerisierbare ungesättigte Gruppe hat.

2. Polymerfeinteilchen nach Anspruch 1, dadurch **gekennzeichnet,** daß das hydrophile Monomere (a) eine polymerisierbare Doppelbindung im Molekül hat.

3. Polymerfeinteilchen nach Anspruch 1, dadurch **gekennzeichnet,** daß das hydrophile Monomere (a) aus der Gruppe bestehend aus Verbindungen der folgenden allgemeinen Formeln [2], [3] und [4] ausgewählt ist: 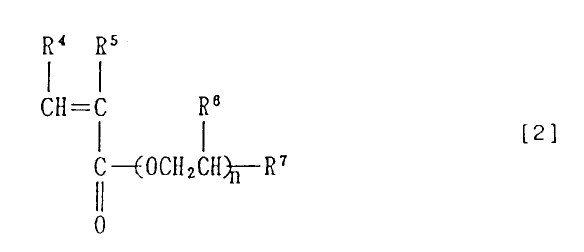 [worin R⁴, R⁵ und R⁶ gleich oder verschieden sein können und jeweils für ein Wasserstoffatom oder eine Methylgruppe stehen, n eine ganze Zahl von 10 bis 200 ist, R⁷ für -OH,-OCH₃, -SO₃H oder -SO₃⁻M⁺ steht (worin M⁺ die Bedeutung Na⁺, K⁺, Li⁺, NH₄⁺ oder eine organische Ammoniumgruppe hat) und die Gruppen R⁶ in den n-Gruppen, die durch 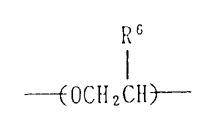 angegeben werden, gleich oder verschieden sind], 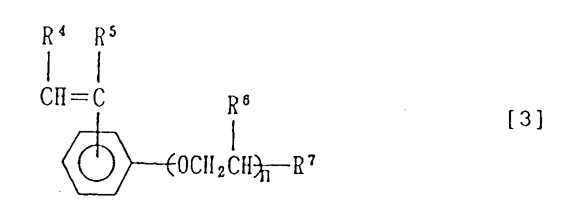 (worin R⁴, R⁵, R⁶, R⁷ und n die oben angegebenen Definitionen haben), 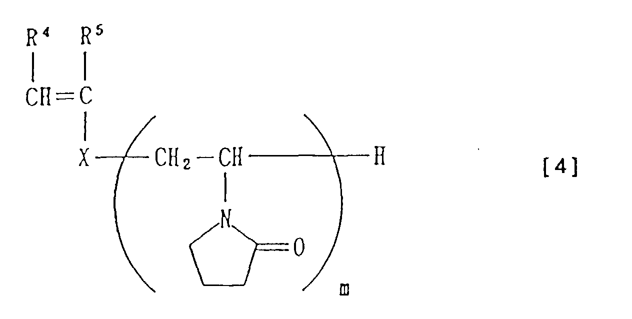 (worin R⁴ und R⁵ die gleichen Definitionen wie oben angegeben haben, X für eine zweiwertige organische Gruppe mit 5 bis 10 Kohlenstoffatomen steht, die (ein) O-, S- oder N-Atom(e) enthalten kann, und m eine ganze Zahl von 10 bis 100 ist).

4. Polymerfeinteilchen nach Anspruch 3, dadurch **gekennzeichnet,** daß das hydrophile Monomere (a) eine Verbindung der Formel [2] oder [3] ist.

5. Polymerfeinteilchen nach Anspruch 4, dadurch **gekennzeichnet,** daß n eine ganze Zahl von 30 bis 200 ist.

6. Polymerfeinteilchen nach Anspruch 4, dadurch **gekennzeichnet,** daß R⁴ für ein Wasserstoffatom steht, R⁵ für ein Wasserstoffatom oder eine Methylgruppe steht und R⁶ für ein Wasserstoffatom steht.

7. Polymerfeinteilchen nach Anspruch 1, dadurch **gekennzeichnet,** daß das Monomere vom (Meth)acrylamidtyp (b) aus der Gruppe bestehend aus Acrylamid, Methyacrylamid, N-Methylacrylamid, N-Methylmethacrylamid, N,N-Dimethylacrylamid, N,N-Dimethylmethacrylamid, N-Ethylacrylamid, N-Ethylmethacrylamid, N-n-Propylacrylamid, N-n-Propylmethacrylamid, N-Isopropylacrylamid, N-Isopropylmethacrylamid und N-n-Butylacrylamid ausgewählt ist.

8. Polymerfeinteilchen nach Anspruch 1, dadurch **gekennzeichnet,** daß das vernetzbare ungesättigte Monomere (c) zwei bis fünf polymerisierbare Doppelbindungen im Molekül hat.

9. Polymerfeinteilchen nach Anspruch 8, dadurch **gekennzeichnet,** daß das vernetzbare ungesättigte Monomere (c) aus der Gruppe bestehend aus Methylen-bis (meth) acrylamid, Ethylenglykoldi (meth) acrylat, Triethylenglykoldi(meth)acrylat, Tetraethylenglykoldi(meth)acrylat, 1,3-Butylenglykoldi(meth)acrylat, 1,6-Hexandioldi(meth)acrylat,Trimethylolpropan, Tri(meth)acrylat, Divinylbenzol und Allyl(meth)acrylat ausgewählt ist.

10. Polymerfeinteilchen nach Anspruch 1, dadurch **gekennzeichnet,** daß das vernetzbare ungesättigte Monomere (c) eine Verbindung ist, die im Molekül eine funktionelle Gruppe, ausgewählt aus einer hydrolysierbaren Silylgruppe und einer 1,2-Epoxygruppe, und eine polymerisierbare Doppelbindung besitzt.

11. Polymerfeinteilchen nach Anspruch 10, dadurch **gekennzeichnet,** daß das vernetzbare ungesättigte Monomere (c) aus der Gruppe bestehend aus γ-Methacryloyloxypropyltrimethoxysilan, γ-Acryloyloxypropyltrimethoxysilan, Vinyltriethoxysilan, Vinyltrimethoxysilan, 2-Styrylethyltrimethoxysilan, Vinyltris(methoxyethoxy)silan, Glycidyl (meth)acrylat und Allylglycidylether ausgewählt ist.

12. Polymerfeinteilchen nach Anspruch 1, dadurch **gekennzeichnet,** daß das vernetzbare ungesättigte Monomere (c) aus der Gruppe bestehend aus Methylenbisacrylamid, Methylenbismethacrylamid und Glycidylmethacrylat ausgewählt ist.

13. Polymerfeinteilchen nach Anspruch 1, dadurch **gekennzeichnet,** daß das Monomere (d) aus der Gruppe bestehend aus einem C₁₋₂₄-Alkyl- oder Cycloalkylester der (Meth)acrylsäure, einem C₂₋₈-Hydroxyalkylester der (Meth)acrylsäure, einem Carboxylgruppen-enthaltenden ungesättigten Monomeren, einem polymerisierbaren ungesättigten Nitril, einer aromatischen Vinylverbindung, einem N-C₁₋₅-Alkoxymethyl (meth) acrylamid, einem α-Olefin, einer Dienverbindung, einem Vinylester und einem Vinylether ausgewählt ist.

14. Polymerfeinteilchen nach Anspruch 1, dadurch **gekennzeichnet,** daß sie aus einem Copolymeren hergestellt sind, das aus folgendem besteht:
2 bis 40 Gew.-% des hydrophilen Monomeren (a),
40 bis 97 Gew.-% des Monomeren (b) vom (Meth)acrylamidtyp,
1 bis 20 Gew.-% des vernetzbaren ungesättigten Monomeren (c) und
0 bis 40 Gew.-% des Monomeren (d).

15. Polymerfeinteilchen nach Anspruch 1, dadurch **gekennzeichnet,** daß sie einen mittleren Teilchendurchmesser von 0,03 bis 1 µm haben.

16. Polymerfeinteilchen nach Anspruch 1, dadurch **gekennzeichnet,** daß sie durch Polymerisation des hydrophilen Monomeren (a), des Monomeren (b) vom (Meth)acrylamidtyp, des vernetzenden ungesättigten Monomeren (c) und erforderlichenfalls des Monomeren (d) in Abwesenheit irgendeines Dispersionsstabilisators in einem mit Wasser mischbaren organischen Lösungsmittel, das dazu imstande ist, die obigen Monomeren aufzulösen, aber im wesentlichen nicht dazu imstande ist, das gebildete Copolymere aufzulösen oder in einem Mischlösungsmittel aus dem genannten mit Wasser mischbaren organischen Lösungsmittel und Wasser hergestellt worden sind.

17. Verfahren zur Herstellung von hydrophilen vernetzten Polymerfeinteilchen mit einem mittleren Teilchendurchmesser von 0,03 bis 1 µm, umfassend die Polymerisation von
(a) 2 bis 50 Gew.-% eines hydrophilen Monomeren, das im Molekül mindestens eine polymerisierbare Doppelbindung und eine Polyoxyalkylen- oder Polyvinylpyrrolidonkette hat,
(b) 20 bis 97 Gew.-% mindestens eines Monomeren vom (Meth)acrylamidtyp, ausgewählt aus der Gruppe bestehend aus Verbindungen der folgenden allgemeinen Formel [1]: 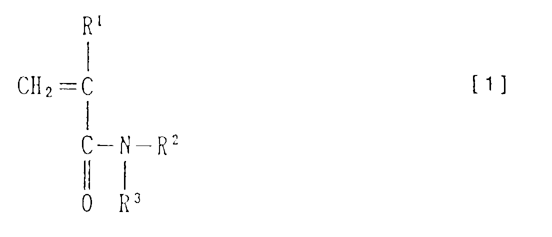 (worin R¹ für ein Wasserstoffatom oder eine Methylgruppe steht und R² und R³ gleich oder verschieden sein können und jeweils ein Wasserstoffatom oder eine Alkylgruppe mit 1 bis 5 Kohlenstoffatomen bedeuten, mit der Maßgabe, daß die Summe der Kohlenstoffatome von R und R³ 5 oder weniger ist),
(c) 1 bis 30 Gew.-% eines vernetzbaren ungesättigten Monomeren, ausgewählt aus der Gruppe bestehend aus Verbindungen, die im Molekül mindestens zwei polymerisierbare Doppelbindungen haben und Verbindungen, die im Molekül mindestens eine funktionelle Gruppe, ausgewählt aus hydrolysierbaren Silylgruppen und 1,2-Epoxygruppen, und eine polymerisierbare Doppelbindung haben und
(d) 0 bis 50 Gew.-% eines anderen Monomeren als oben unter (a), (b) und (c) angegeben, das im Molekül eine polymerisierbare ungesättigte Gruppe hat,
in Abwesenheit irgendeines Dispersionsstabilisators in einem mit Wasser mischbaren organischen Lösungsmittel, das dazu imstande ist, die obigen Monomeren aufzulösen, aber im wesentlichen nicht dazu imstande ist, das gebildete Copolymere aufzulösen oder in einem Mischlösungsmittel aus dem genannten mit Wasser mischbaren organischen Lösungsmittel und Wasser hergestellt worden sind.

18. Verfahren nach Anspruch 17, dadurch **gekennzeichnet,** daß das mit Wasser mischbare organische Lösungsmittel einen Löslichkeitsparameter von 9 bis 11 hat.

19. Verfahren nach Anspruch 17, dadurch **gekennzeichnet,** daß die Polymerisation bei einer Temperatur von 90 bis 160°C durchgeführt wird.

20. Einen hydrophilen Film bildende Beschichtungsmasse, umfassend:
hydrophile vernetzte Polymerfeinteilchen nach Anspruch 1,
ein mit Wasser mischbares filmbildendes Harz und
ein wäßriges Medium, das im wesentlichen nicht dazu imstande ist, die genannten Polymerfeinteilchen aufzulösen, das aber dazu imstande ist, das genannte, mit Wasser mischbare filmbildende Harz aufzulösen oder zu dispergieren.

21. Masse nach Anspruch 20, dadurch **gekennzeichnet,** daß das mit Wasser mischbare filmbildende Harz aus der Gruppe bestehend aus Polyvinylalkohol, Polycarboxymethylcellulose, einer wäßrigen Acrylharzemulsion, einer wäßrigen Polyesteremulsion, einer wäßrigen Polyurethanemulsion und einem Ethylen-Acrylsäure-Ionomerharz ausgewählt worden ist.

22. Masse nach Anspruch 20, dadurch **gekennzeichnet,** daß das Gewichtsverhältnis hydrophile vernetzte Polymerfeinteilchen/mit Wasser mischbares filmbildendes Harz 10/90 bis 90/10 beträgt.

23. Gegenstand, beschichtet mit einer hydrophilen filmbildenden Beschichtungsmasse nach Anspruch 20.

## Revendications

1. Particules fines de polymères hydrophiles réticulés constituées d'un copolymère composé :
- de 2 à 50 % en poids de (a) un monomère hydrophile ayant dans la molécule au moins une double liaison polymérisable et un polyoxyalkylène ou une chaîne polyvinylpyrrolidone,
- de 20 à 97 % en poids de (b) au moins un monomère de type (méth)acrylamide choisi dans le groupe constitué de composés représentés par la formule générale suivante [1] : 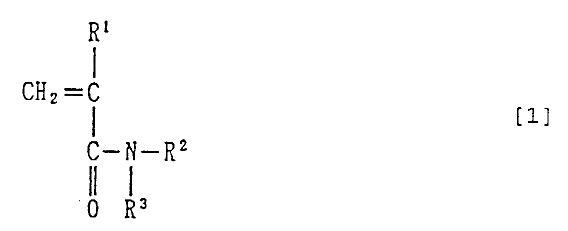 (dans laquelle R¹ représente un atome d'hydrogène ou un groupe méthyle; et R² et R³ peuvent être identiques ou différents et représentent chacun un atome d'hydrogène ou un groupe alkyle ayant de 1 à 5 atomes de carbone à la condition que la somme des atomes de carbone de R² et R³ soit égale à 5 ou moins),
- de 1 à 30 % en poids de (c) un monomère réticulable insaturé choisi dans le groupe constitué de composés ayant dans la molécule au moins deux doubles liaisons polymérisables, et des composés ayant dans la molécule au moins un groupe fonctionnel choisi dans de groupe constitué de groupes silyle hydrolysables et de groupes 1,2-époxy et d'une double liaison polymérisable, et
- de 0 à 50 % en poids de (d) un monomère autre que (a), (b) et (c) ci-dessus, ayant un groupe polymérisable insaturé dans la molécule.

2. Particules fines de polymères selon la revendication 1, où le monomère hydrophile (a) possède une double liaison polymérisable dans la molécule.

3. Particules fines de polymères selon la revendication 1, où le monomère hydrophile (a) est choisi dans le groupe constitué de composés représentés par les formules générales suivantes [2], [3] et [4] : 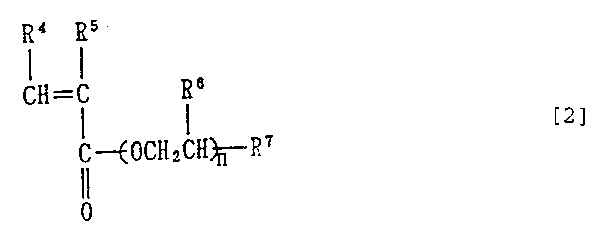 [où R⁴, R⁵ et R⁶ peuvent être identiques ou différents et représentent chacun un atome d'hydrogène ou un groupe méthyle; n est un entier de 10 à 200; R⁷ représente -OH, -OCH₃, -SO₃H ou -SO₃⁻M⁺ (où M⁺ représente Na⁺, K⁺, Li⁺, NH₄⁺ ou un groupe ammonium organique); et les restes R⁶ représentés dans les n groupes par : 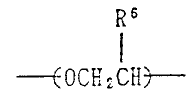 peuvent être identiques ou différents], 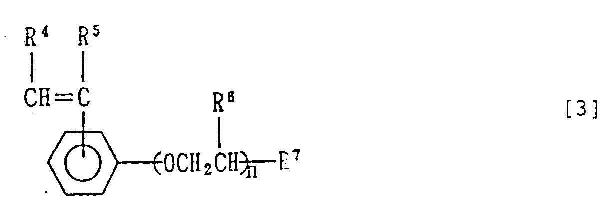 (où R⁴, R⁵, R⁶, R⁷ et n ont les mêmes définitions que données précédemment), 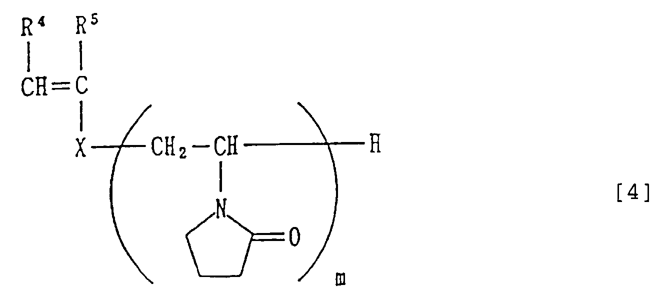 (où R⁴ et R⁵ ont les mêmes définitions que celles données ci-dessus; X représente un groupe organique bivalent ayant de 5 à 10 atomes de carbone, lequel peut contenir un atome(s) de O, S ou N, et m est un entier de 10 à 100).

4. Particules fines de polymères selon la revendication 3, où le monomère hydrophile (a) est un composé de formule [2] ou [3].

5. Particules fines de polymères selon la revendication 4, où n est un entier de 30 à 200.

6. Particules fines de polymères selon la revendication 4, où R⁴ représente un atome d'hydrogène, R⁵ représente un atome d'hydrogène ou un groupe méthyle et R⁶ représente un atome d'hydrogène.

7. Particules fines de polymère selon la revendication 1, où le monomère (b) du type (méth)acrylamide est choisi dans le groupe constitué d'acrylamide, de méthacrylamide, de N-méthylacrylamide, de N-méthylmethacrylamide, de N,N-diméthylacrylamide, de N,N-diméthylméthacrylamide, de N-éthylacrylamide, de N-éthylméthacrylamide, N-n-propylacrylamide, de N-n-propylméthacrylamide, de N-isopropylacrylamide, de N-isopropylméthacrylamide et N-n-butylacrylamide.

8. Particules fines de polymères selon la revendication 1, où le monomère insaturé réticulable (c) présente 2 à 5 doubles liaisons polymérisables dans la molécule.

9. Particules fines de polymères selon la revendication 8, où le monomère insaturé réticulable (c) est choisi dans le groupe constitué de méthylènebis(méth)acrylamide, de di(méth)acrylate d'éthylèneglycol, de di(méth)acrylate de triéthylèneglycol, di(méth)acrylate de tétraéthylène-glycol, de di(méth)acrylate de 1,3-butylèneglycol, de di(méth)acrylate de 1,6-hexanediol, de tri(méth)acrylate de triméthylolpropane, de divinylbenzène et de (méth)acrylate d'allyle.

10. Particules fines de polymères selon la revendication 1, où le monomère insaturé réticulable (c) est un composé ayant dans la molécule un groupe fonctionnel choisi parmi un groupe silyle hydrolysable et un groupe 1,2-époxy et une double liaison polymérisable.

11. Particules fines de polymères selon la revendication 10, où le monomère insaturé réticulable (c) est choisi dans le groupe constitué de γ-méthacryloyloxypropyltriméthoxysilane, de γ-acryloyloxypropyltriméthoxysilane, de vinyltriéthoxysilane, de vinyltriméthoxysilane, de 2-styryléthyltriméthoxysilane, de vinyltris(méthoxyéthoxy)silane, de (méth)acrylate de glycidyle et d'éther d'allylglycidyle.

12. Particules fines de polymères selon la revendication 10, où le monomère insaturé réticulable (c) est choisi dans le groupe constitué de méthylènebisacrylamide, de méthylènebisméthacrylamide et de méthacrylate de glycidyle.

13. Particules fines de polymères selon la revendication 10, où le monomère insaturé réticulable (d) est choisi dans le groupe constitué d'un ester d'alkyle en C₁-C₂₄ ou de cycloalkyle d'acide (méth)acrylique, d'un ester d'hydroxyalkyle en C₂-C₈ d'acide (méth)acrylique, d'un monomère insaturé contenant un groupe carboxylique, d'un nitrile insaturé polymérisable, d'un composé vinylaromatique, d'un N-(alcoxy en C₂-C₅)méthyl(méth)acrylamide, d'une α-oléfine, d'un composé diénique, d'un ester vinylique et d'un éther vinylique.

14. Particules fines de polymères selon la revendication 1, constitué d'un copolymère composé de :
- de 2 à 40 % en poids du monomère hydrophile (a),
- de 40 à 97 % en poids de monomère du type (méth)acrylamide (b),
- de 1 à 20 % en poids du monomère insaturé réticulable (c), et
- de 0 à 40 % en poids du monomère (d).

15. Particules fines de polymères selon la revendication 1, ayant un diamètre moyen des particules de 0,03 à 1 µm.

16. Particules fines de polymères selon la revendication 1, lesquelles sont produites en polymérisant le monomère hydrophile (a), le monomère (b) du type (méth)acrylamide, le monomère insaturé réticulant (c) et, si nécessaire, le monomère (d) en l'absence de tout stabilisant de dispersion dans un solvant organique miscible à l'eau, capable de dissoudre les monomères ci-dessus, mais essentiellement incapable de dissoudre le copolymère formé, ou dans un mélange dudit solvant organique miscible à l'eau et d'eau.

17. Procédé de production de particules fines de polymères hydrophiles réticulés ayant un diamètre moyen de particules de 0,03 à 1 µm, lequel procédé comprend la polymérisation :
- de 2 à 50 % en poids de (a) un monomère hydrophile ayant, dans la molécule au moins une double liaison polymérisable et une chaîne de polyoxyalkylène ou de polyvinylpyrrolidone,
- de 20 à 97 % en poids de (b) au moins un monomère du type (méth)acrylamide choisi dans le groupe constitué des composés représentés par la formule générale [1] suivante: 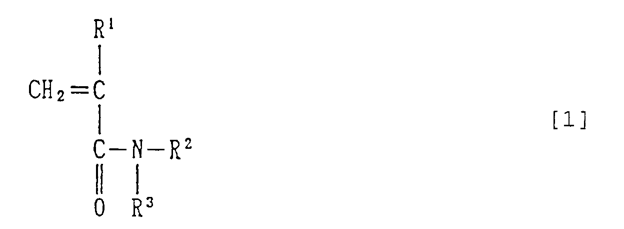
- (où R¹ représente un atome d'hydrogène ou un groupe méthyle; et R² et R³ peuvent être identiques ou différents et représentent chacun un atome d'hydrogène ou un groupe alkyle ayant de 1 à 5 atomes de carbone, à la condition que la somme des atomes de carbones de R² et R³ soit égale à 5 ou moins),
- de 1 à 30 % en poids de (c) un monomère insaturé réticulable choisi dans le groupe constitué de composés ayant dans la molécule au moins deux doubles liaisons polymérisables et des composés ayant dans la molécule au moins un groupe fonctionnel choisi parmi les groupes silyle hydrolysables et les groupes époxy 1,2 et une double liaison polymérisable, et
- de 0 à 50 % en poids d'un monomère (d) autre que (a), (b) et (c) ci-dessus, ayant un groupe insaturé polymérisable dans la molécule, en l'absence de tout stabilisant de dispersion dans un solvant organique miscible à l'eau, capable de dissoudre le monomère ci-dessus, mais essentiellement incapable de dissoudre le copolymère formé, ou dans un solvant mixte dudit solvant organique miscible à l'eau et d'eau.

18. Procédé selon la revendication 17, où le solvant organique miscible à l'eau présente un paramètre de solubilité de 9 à 11.

19. Procédé selon la revendication 17, où la polymérisation est réalisée à une température de 90 à 160°C.

20. Composition de revêtement hydrophile filmogène comprenant :
- des particules fines de polymère hydrophile réticulé selon la revendication 1,
- une résine filmogène miscible à l'eau, et
- un milieu aqueux essentiellement incapable de dissoudre les particules fines dudit polymère, mais capable de dissoudre ou de disperser ladite résine filmogène miscible à l'eau.

21. Composition selon la revendication 20, où on choisit la résine filmogène miscible à l'eau dans un groupe constitué de poly(alcool vinylique), d'une polycarboxyméthylcellulose, d'une émulsion aqueuse de résine acrylique, d'une émulsion aqueuse de polyester, d'une émulsion aqueuse de polyuréthanne et d'une résine ionomère de type éthylène-acide acrylique.

22. Composition selon la revendication 20, où le rapport en poids des particules fines de polymère hydrophile réticulé/résine filmogène miscible à l'eau est de 10/90 à 90/10.

23. Article revêtu par une composition de revêtement hydrophile filmogène selon la revendication 20.
